# EUROPEAN PATENT SPECIFICATION

(11) **EP 1 645 447 B1**
(45) Date of publication and mention of the grant of the patent: **25.04.2007**
(21) Application number: 04425746.7
(22) Date of filing: 06.10.2004
(51) Int. Cl.: B60H 1/32

(54) **Condensate draining hose for vehicle air conditioning systems**
Kondenswasserablaufschlauch für Fahrzeugklimaanlagen
Tuyau d'écoulement de la condensation pour climatisations de véhicules

(43) Date of publication of application: 12.04.2006
(73) Proprietor: DENSO THERMAL SYSTEMS S.p.A., 10046 Poirino (Torino) (IT)
(72) Inventor: Bergamo, Luca c/o Denso Thermal Systems S.p.a., 10046 Poirino (Torino) (IT); Carbone, Andrea c/o Denso Thermal Systems S.p.a., 10046 Poirino (Torino) (IT); Nalon, Massimo c/o Denso Thermal Systems S.p.a., 10046 Poirino (Torino) (IT)
(74) Representative: Marchitelli, Mauro

(56) References cited:
- DE-A- 10 151 620
- DE-A- 19 946 338
- DE-C- 19 647 734
- DE-C- 19 816 331

## Description

The present invention relates to a condensate draining hose for vehicle air conditioning systems:

Vehicle air conditioning systems are normally provided with a tray positioned underneath the evaporator, able to collect the condensate water which is formed on the evaporator during operation. To drain the condensation collected in said tray outside the air conditioning system, a draining hose is generally used having a first end connected to the tray and a second end connected to a draining hole provided in the sheet metal wall of the vehicle which communicates with the exterior. Document DE 19647734 C, which is considered as the closest prior art, discloses such a draining hose.

The object of the present invention is to provide a condensate draining hose that is simple, inexpensive, and that can be assembled in simple and rapid fashion without using tools or fastening components.

According to the present invention, said object is achieved by a condensate draining hose having the characteristics set out in the claims.

The present invention shall now be described in detail with reference to the accompanying drawings, provided purely by way of non limiting example, in which:

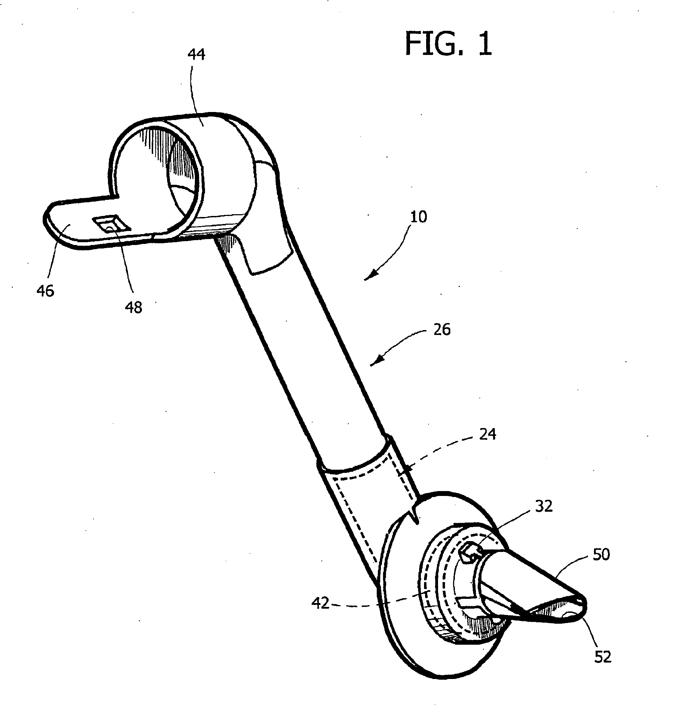

- Figure 1 is a perspective view of a condensate draining hose according to the present invention,
- Figure 2 is a plan view of the draining hose of Figure 1 mounted on an air conditioning system,
- Figure 3 is a section according to the line III-III of Figure 2, and
- Figure 4 is a section according to the line IV-IV of Figure 3.

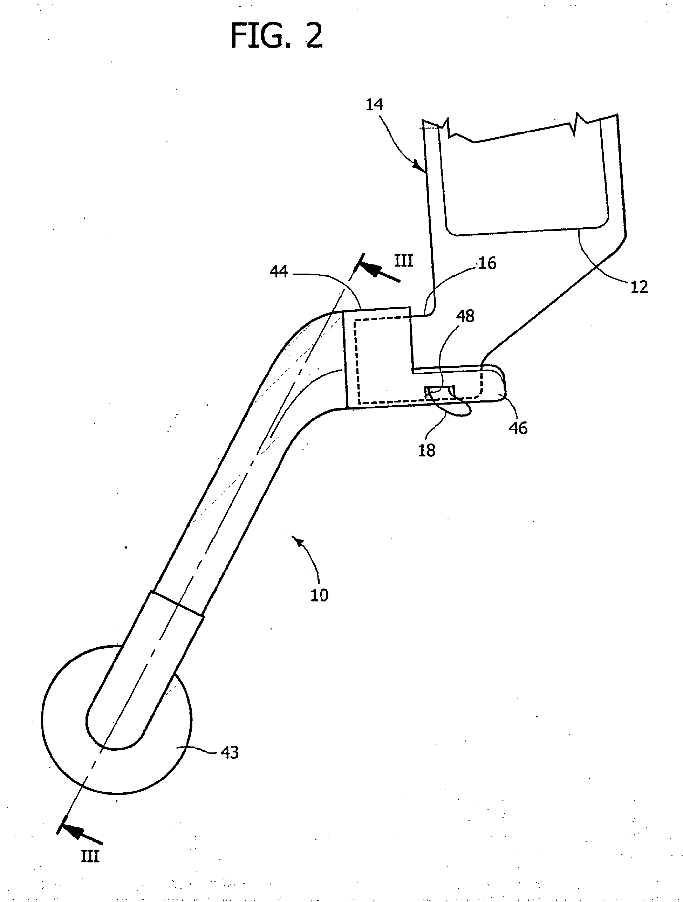

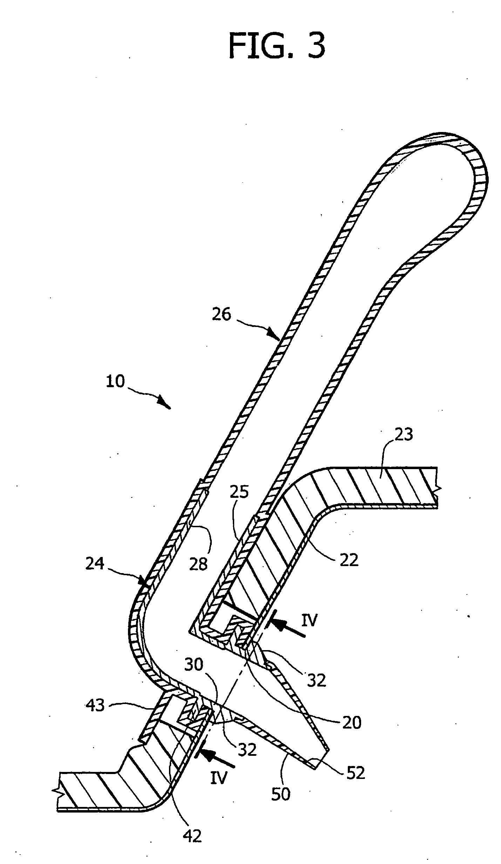

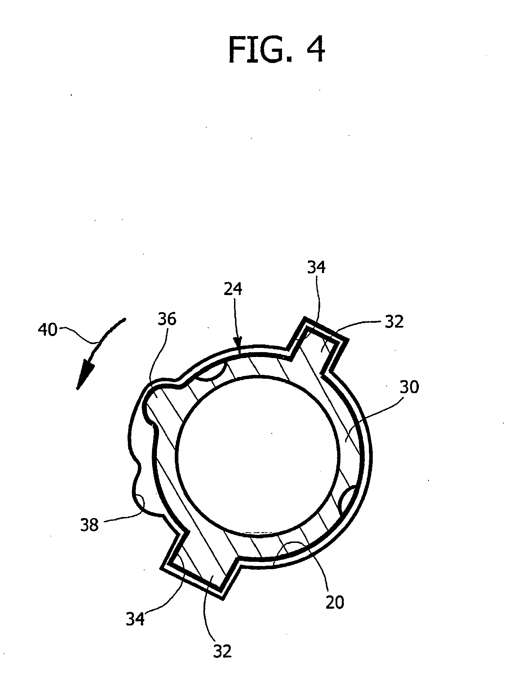

With reference to the figures, the reference number 10 designates a condensate draining hose for vehicle air conditioning systems. With reference to Figure 2, the reference number 12 schematically designates an evaporator of an air conditioning system. Underneath the evaporator is positioned tray 14 for collecting the condensate which is formed on the evaporator 12 in operation. The tray 14 has a tubular draining portion 16 provided with a retaining tab 18 projecting from its outer wall. The draining hose 10 connects the tubular draining portion 16 of the collection tray 14 to an outlet hole designated by the reference number 20 in Figures 3 and 4, formed in a sheet metal wall of the motor vehicle communicating with the exterior. The sheet metal wall 22 bears on its inner side a sound insulating layer 23. The sound insulating layer 23 has a hole 25 communicating with the hole 20 of the sheet metal wall 22.

With reference in particular to Figure 3, the hose 10 comprises a connection element 24 made of rigid plastic material, on which is co-moulded a body 26 made of elastomeric material. The connection element 24 is obtained by injection moulding and it has two tubular segments 28, 30 substantially at right angle with respect to each other. The tubular segment 30 has on its outer surface bayonet coupling means formed by two radial projections 32 (Figures 3 and 4). The two radial projections 32 are inserted in respective openings 34 formed on the periphery of the drain hole 20 in the outer sheet metal wall of the vehicle. On the outer surface of the tubular portion 30 is also provided a retaining tooth 36 having rounded shape which engages a retaining notch 38 formed along the perimeter of the drain hole 20. With reference to Figure 4, the draining hose 10 in the outlet hole 20 is mounted simply by inserting the radial projections 32 into the corresponding openings 34 and then rotating the hose in the direction indicated by the arrow 40 in Figure 4 until bringing the tooth 36 to engage the notch 38. The radial projections 32 preferably have a different thickness to prevent mounting errors.

The tubular portion 30 of the connecting element 24 has on its outer surface an annular radial projection 42 (Figure 3) positioned at a predetermined distance in axial direction with respect to the front surfaces of the projections 32 forming the bayonet coupling.

As shown in Figure 3, the body made of elastomeric material 26 almost completely coats the connecting element 28. The only part of the connecting element 28 which is not covered by the body of elastomeric material 26 is the bayonet coupling portion with the two radial projections 32. The annular projection 42 is coated by a layer of elastomeric material, as is the tubular portion 28 of the connecting element 24.

The body made of elastomeric material 26 has an end 44 shaped in such a way as to be coupled on the outer surface of the tubular portion 16 of the tray 14. The end 44 of the body made of elastomeric material 26 has an extension 46 with a hole 48 which receives the retaining tab 18 of the tubular portion 16.

As shown in Figure 3, the elastomeric material which coats the radial projection 42 of the connecting element 24 has a front surface that in use is pressed against the inner surface of the wall 22 in the immediate vicinity of the outlet hole 20 and forms a seal against the entry of dust or humidity in the air conditioning system through the drain hole 20.

The body made of elastomeric material 26 is also provided with a radial flange 43 with circular shape which presses on the inner frontal surface of the sound insulating layer 23 around the hole 25. The radial flange 23 acoustically seals the hole 25 formed in the sound insulating layer 23.

Preferably, the body made of elastomeric material 26 also has a beak shaped extension 50 on the end of the connecting element 24 which in use extends outside the air conditioning system. The beak shaped portion 50 has an opening 52 for the outflow of the condensation, which has a reduced dimension to prevent the entry of dust or dirt into the drain hose 10.

The elastomeric material forming the body 26 is soft and flexible while the plastic material forming the connecting element 24 is rigid. The purpose of the rigidity of the connecting element 24 is to obtain a secure engagement to the outlet hole 20 by means of the projections 32 forming the bayonet coupling. The body made of elastomeric material 26 instead allows a flexible connection to the tubular portion 16 of the tray 14. The softness of the elastomeric material also allows to form a sealing gasket around the outlet hole 20 as described above.

The hose 10 is obtained by co-moulding elastomeric material on the connecting element 24, previously produced in a separate injection moulding stage. The outlet hose 10 constitutes a monolithic component which is assembled without any need for tools or auxiliary fastening components.

## Claims

1. A condensate draining hose for vehicle air conditioning systems, comprising a first end suitable for being connected to an outlet hole (20) formed in an outer sheet metal wall (22) of the vehicle and a second end suitable for being connected to a condensate collection tray (14) situated underneath an evaporator (12), **characterised in that** it comprises:
- a connecting element (24) made of rigid plastic material provided with bayonet coupling means (32) for connecting the first end of the hose (10) to said outlet hole (20), and
- a body made of elastomeric material (26) co-moulded on the connecting element (24) and provided with an end portion (44) shaped for connection to a tubular end (16) of said tray (14).

2. Drain hose as claimed in claim 1, **characterised in that** the body of elastomeric material (26) covers the outer surface of the connecting element (24) with the exception of said bayonet coupling means (32).

3. Drain hose as claimed in claim 1, **characterised in that** the connecting element (24) has two tubular segments (28, 30) substantially at 90° with respect to each other.

4. Drain hose as claimed in claim 1, **characterised in that** the connecting element is provided with an annular radial projection (42) coated with elastomeric material and adjacent to said bayonet coupling means (32).

5. Drain hose as claimed in claim 1, **characterised in that** the body of elastomeric material (26) comprises a beak shaped portion (50) projecting from an end portion of said connecting element (24).

6. Drain hose as claimed in claim 3, **characterised in that** said end (44) of the body made of elastomeric material (26) has an extension (46) with a hole (48) able to receive a retaining tab (18) projecting from the outer surface of said tubular portion (16) of the tray (14).

7. Drain hose as claimed in claim 1, **characterised in that** the body made of elastomeric material (26) is provided with a radial flange (43) able to seal from the acoustic viewpoint a hole (25) formed in a sound insulating layer (23) applied on the inner side of said sheet metal wall (22).

## Patentansprüche

1. Kondensatablaufschlauch für Fahrzeugklimaanlagen, aufweisend ein erstes Ende, das geeignet ist, mit einer Auslassöffnung (20) verbunden zu werden, die in einer äußeren Blechwand (22) des Fahrzeugs gebildet ist und ein zweites Ende, das geeignet ist, mit einer Kondensatauffangschale (14) verbunden zu werden, die unterhalb eines Verdampfers (12) angeordnet ist, **dadurch gekennzeichnet, dass** der Kondensatablaufschlauch umfasst:
ein Verbindungselement (24), das aus einem festen Kunststoffmaterial hergestellt wurde, bereitgestellt mit Bajonettverbindungsmitteln (32) zum Verbinden des ersten Endes des Schlauchs (10) mit der Auslassöffnung (20), und
einen Körper, der aus einem elastomerischen Material (26) hergestellt wurde, der mit dem Verbindungselement (24) zusammen geformt wurde, und der mit einem Endbereich (44) bereitgestellt ist, der zur Verbindung mit einem rohrförmigen Ende (16) der Schale (14) geformt ist.

2. Ablaufschlauch gemäß Anspruch 1, **dadurch gekennzeichnet, dass** der Körper aus elastomerischem Material (26) die äußere Oberfläche des Verbindungselements (24) ummantelt, mit Ausnahme der Bajonettverbindungsmittel (32).

3. Ablaufschlauch gemäß Anspruch 1, **dadurch gekennzeichnet, dass** das Verbindungselement (24) zwei rohrförmige Segmente (28, 30) aufweist, die im Wesentlichen 90° zueinander stehen.

4. Ablaufschlauch gemäß Anspruch 1, **dadurch gekennzeichnet, dass** das Verbindungselement mit einem umlaufenden radialen Vorsprung (42) ausgestattet ist, das mit elastomerischem Material ummantelt ist, und das benachbart zu den Bajonettverbindungsmitteln (32) angeordnet ist.

5. Ablaufschlauch gemäß Anspruch 1, **dadurch gekennzeichnet, dass** der Körper aus elastomerischem Material (26) einen tüllenförmigen Bereich (50) aufweist, der von einem Endbereich des Verbindungselements (24) absteht.

6. Ablaufschlauch gemäß Anspruch 3, **dadurch gekennzeichnet, dass** das Ende (44) des Körpers, der aus einem elastomerischen Material (26) hergestellt ist, eine Verlängerung (46) mit einer Öffnung (48) aufweist, die geeignet ist, eine Rückhaltelasche (18) aufzunehmen, die von der äußeren Oberfläche des rohrförmigen Bereichs (16) der Schale (14) absteht.

7. Ablaufschlauch gemäß Anspruch 1, **dadurch gekennzeichnet, dass** der Körper, der aus einem elastomerischen Material (26) hergestellt ist, mit einem radialen Flansch (43) ausgestattet ist, der geeignet ist, im Hinblick auf die Akustik eine Öffnung (25) abzudichten, die in einer Schallisolationsschicht (23) gebildet ist, die auf der inneren Seite der Blechwand (22) aufgebracht ist.

## Revendications

1. Tuyau d'évacuation de condensat pour des systèmes de climatisation de véhicule, comprenant une première extrémité appropriée pour être raccordée à un trou de sortie (20) formé dans une paroi de tôle externe (22) du véhicule et une seconde extrémité appropriée pour être raccordée à un plateau de collecte de condensat (14) situé au-dessous d'un évaporateur (12), **caractérisé en ce qu'**il comprend :
un élément de raccordement (24) réalisé avec une matière plastique rigide prévue avec des moyens de couplage à baïonnette (32) pour raccorder la première extrémité du tuyau (10) au trou de sortie (20), et
un corps réalisé avec un matériau élastomère (26) co-moulé sur l'élément de raccordement (24) et prévu avec une partie d'extrémité (44) formée pour le raccordement à une extrémité tubulaire (16) dudit plateau (14).

2. Tuyau d'évacuation selon la revendication 1, **caractérisé en ce que** le corps en matériau élastomère (26) recouvre la surface externe de l'élément de raccordement (24) à l'exception desdits moyens de couplage à baïonnette (32).

3. Tuyau d'évacuation selon la revendication 1, **caractérisé en ce que** l'élément de raccordement (24) a deux segments tubulaires (28, 30) sensiblement à 90° l'un par rapport à l'autre.

4. Tuyau d'évacuation selon la revendication 1, **caractérisé en ce que** l'élément de raccordement est prévu avec une saillie radiale annulaire (42) recouverte avec un matériau élastomère et adjacente auxdits moyens de couplage à baïonnette (32).

5. Tuyau d'évacuation selon la revendication 1, **caractérisé en ce que** le corps en matériau élastomère (26) comprend une partie en forme de bec (50) faisant saillie à partir d'une partie d'extrémité dudit élément de raccordement (24).

6. Tuyau d'évacuation selon la revendication 3, **caractérisé en ce que** ladite extrémité (44) du corps réalisé avec un matériau élastomère (26) a une extension (46) avec un trou (48) pouvant recevoir une patte de retenue (18) faisant saillie à partir de la surface externe de ladite partie tubulaire (16) du plateau (14).

7. Tuyau d'évacuation selon la revendication 1, **caractérisé en ce que** le corps réalisé avec un matériau élastomère (26) est prévu avec un rebord radial (43) pouvant réaliser l'étanchéité d'un trou (25) du point de vue acoustique, formé dans une couche d'isolation acoustique (23) appliquée sur le côté interne de ladite paroi en tôle (22).
